# EUROPÄISCHE PATENTSCHRIFT

(11) **EP 2 240 801 B1**
(45) Veröffentlichungstag und Bekanntmachung des Hinweises auf die Patenterteilung: **19.03.2014**
(21) Anmeldenummer: 09708520.3
(22) Anmeldetag: 02.02.2009
(51) Int. Cl.: G01T 1/20

(54) **VORRICHTUNG UND VERFAHREN ZUM ERFASSEN EINES BILDES**
DEVICE AND METHOD FOR RECORDING AN IMAGE
DISPOSITIF ET PROCÉDÉ D'ACQUISITION D'UNE IMAGE

(30) Priorität: 06.02.2008 DE 102008007595
(43) Veröffentlichungstag der Anmeldung: 20.10.2010
(60) Teilanmeldung: 10194910.5
(73) Patentinhaber: Fraunhofer-Gesellschaft zur Förderung der angewandten Forschung e.V., 80686 München (DE)
(72) Erfinder: SCHMITT, Peter, 91058 Erlangen (DE); KOSTKA, Günther, 91056 Erlangen (DE); BEHRENDT, Rolf, 91077 Dormitz (DE); KUBE, Matthias, 90762 Fürth (DE); GRÖGER, Wolfgang, 91341 Röttenbach (DE)
(74) Vertreter: Zinkler, Franz
(86) Internationale Anmeldenummer: PCT/EP2009/000669
(87) Internationale Veröffentlichungsnummer: WO 2009/098014

(56) Entgegenhaltungen:
- EP-A- 0 166 567
- EP-A- 1 870 770
- DE-A1- 10 021 938
- DE-C1- 4 102 445
- JP-A- 10 295 634
- US-A- 4 589 030
- US-A- 5 016 109

## Beschreibung

Die vorliegende Erfindung bezieht sich auf die Bilderfassung und insbesondere auf die Bilderfassung von Szintillatorschirmen.

Eine optische Aufnahme einer flächigen Bildquelle, wie z. B. eines Schirms, der als Szintillatorschirm ausgebildet sein kann, kann mit einer oder mehreren Kameras stattfinden. Eine solche Aufnahme eines Schirms wird z. B. durch eine Röntgenkamera erreicht, die in der digitalen Radioskopie beispielsweise für die Qualitätskontrolle von Produkten eingesetzt werden kann.

In der medizinischen Radioskopie werden zur Zeit vorzugsweise so genannte Flat-Panel-Detektoren eingesetzt. Bei diesen wird die Röntgenstrahlung in der Regel über einen Szintillatorschirm in sichtbares Licht gewandelt, und dieses wird dann über eine in Strahlrichtung direkt hinter dem Szintillatorschirm angeordnete Halbleiterschicht, die meist aus amorphem Silizium besteht, nachgewiesen und in ein Bild umgesetzt. Die Effizienz eines Szintillatorschirms hängt unter anderem von der eingestellten Energie der Röntgenquanten ab. Je höher die Energie der Röntgenstrahlung ist, desto weniger Röntgenquanten werden im Szintillator absorbiert und tragen zum Bild bei. Die nicht absorbierten Röntgenquanten können von der darunter liegenden Halbleiterschicht absorbiert werden, wodurch diese geschädigt wird. Diese Strahlenschäden führen bei entsprechender Dosis letztendlich zum Ausfall des Detektors.

In der Medizin sind auch Detektoren im Einsatz, bei denen die Röntgenstrahlung zunächst ebenfalls durch einen Szintillator in sichtbares Licht gewandelt wird. Dieses wird jedoch anschließend optisch z. B. auf CCD-Kameras abgebildet.

Das deutsche Patent DE 10301941 B4 zeigt eine Kamera zur optischen Aufnahme eines Schirms, wobei der Schirm eine Fläche aufweist, und wobei für die optische Aufnahme eine vorbestimmte Gesamtauflösung vorgesehen ist, mit einem Kameraträger mit einem Array von Kamerabefestigungen, einem Array von optischen Einzelkameras, wobei jede optische Einzelkamera an einer zugeordneten Kamerabefestigung fest angebracht ist, wobei eine optische Einzelkamera einen Lichtsensor und eine Optikabbildungseinrichtung aufweist, wobei der Lichtsensor und die Optikabbildungseinrichtung wirksam sind, um eine Teilfläche der Schirmfläche mit einer Einzelauflösung aufzunehmen, die höher als die Gesamtauflösung ist, und einer Bildverarbeitungseinrichtung zum Bearbeiten von digitalen Einzelbildern des Arrays von optischen Einzelkameras, um die optische Aufnahme des Schirms mit einer vorbestimmten Gesamtauflösung zu erzeugen, wobei die Bildverarbeitungseinrichtung wirksam ist, um die digitalen Einzelbilder einer Korrektur zu unterziehen, um Ausrichtungsungenauigkeiten und/oder Parameterschwankungen in dem Array von optischen Einzelkameras zu reduzieren, wobei für die Korrektur eine für ein Einzelbild bei einer Kalibrierung bestimmte Korrekturvorschrift verwendet wird, und wobei die Korrektur bei einer Korrekturauflösung stattfindet, die höher als die vorbestimmte Gesamtauflösung und niedriger oder gleich der Einzelauflösung ist, um korrigierte Einzelbilder oder ein korrigiertes Gesamtbild zu erhalten, und um benachbarte Pixel der korrigierten Einzelbilder zu kombinieren und die Bilder dann zusammenzusetzen, oder um benachbarte Pixel des korrigierten Gesamtbilds zu kombinieren, um die optische Aufnahme mit der vorbestimmten Gesamtauflösung zu erhalten.

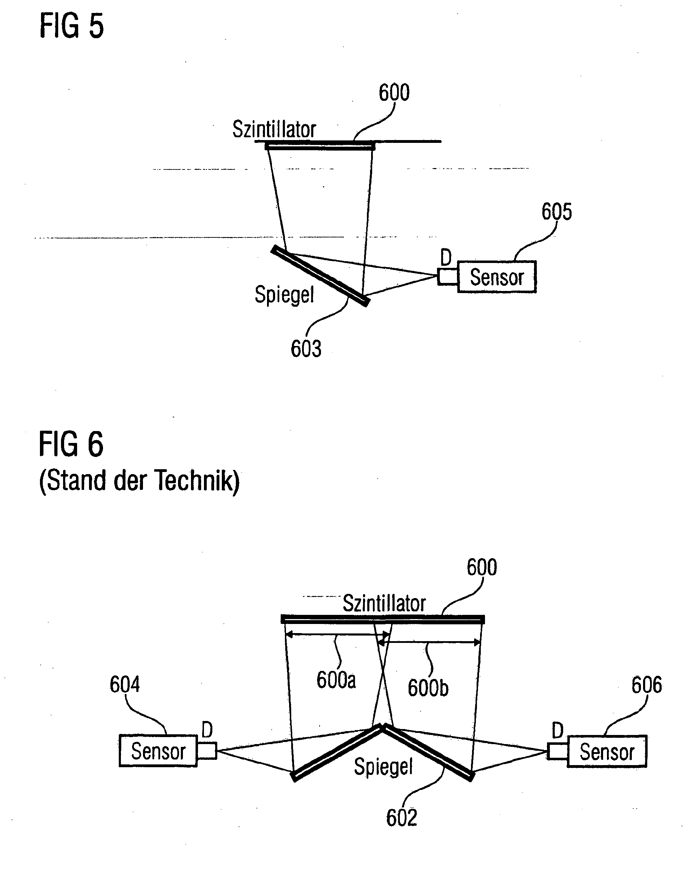

Die EP 0862748 A1 beschreibt eine Anordnung, bei der das von einem Szintillator ausgehende sichtbare Licht über eine V-förmige Spiegelanordnung seitlich umgelenkt wird. Diese seitliche Umlenkung führt dazu, dass der optische Strahlengang hinter dem Spiegel im Wesentlichen parallel zum Szintillatorschirm liegt. Hierdurch können strahlungsempfindliche Kameras außerhalb des Röntgenstrahlengangs angeordnet werden und gleichzeitig Strahlenschäden vermieden werden. Eine solche Anordnung ist beispielsweise in Fig. 6 gezeigt. Insbesondere ist ein Szintillator 600 vorhanden, gegenüber dem die V-förmige Spiegelanordnung 602 angeordnet ist. Die Spiegelanordnung 602 lenkt das von dem Szintillator 600 empfangene Licht um. Im Strahlengang der umgelenkten Strahlung befinden sich zwei Sensoren 604, 606, wobei der Sensor 604 einen ersten Teilbereich 600a abbildet, während der zweite Sensor 606 einen zweiten Teilbereich 600b des Szintillatorschirms abbildet. Die seitliche Anordnung der Sensoren 604, 606 ermöglicht ferner eine reduzierte Aufbauhöhe der Anordnung, so dass sich diese Anordnung in konventionelle Filmkassetten einbauen lässt. EP 1 870 770 offenbart eine Vorrichtung gemäß der Präambel von Anspruch 1.

Eine weitere Alternative zu der in Fig. 6 gezeigten Anordnung ist in Fig. 5 dargestellt. Hier ist nur ein einziger Spiegel 603 angeordnet, der den gesamten Szintillator 600 auf einer einzigen Sensorkamera 605 abbildet. Auch hier ist der Sensor 605 seitlich bezüglich des Szintillators angeordnet.

Nachteilig an den in Fig. 5 und Fig. 6 dargestellten Konzepten ist, dass zwar die Bauhöhe senkrecht zum Szintillatorschirm reduziert wird, da die Sensoren seitlich angeordnet sind. Allerdings hat die seitliche Anordnung der Sensoren wiederum den Nachteil, dass die seitliche Dimension der Röntgenkamera deutlich zunimmt. So ist die Baugröße der Röntgenkamera bei dem in Fig. 6 gezeigten Konzept nicht mehr durch den Szintillatorschirm 600 bestimmt, sondern durch den Platzbedarf der beiden Sensorkameras 604, 606 und den minimalen Abstand der beiden Sensorkameras 604, 606 von dem V-förmigen Spiegel 602, damit die optischen Abbildungsverhältnisse erreicht werden. Die Länge der Röntgenkamera nimmt daher im Vergleich zu der Implementierung, bei der die Halbleiterschicht direkt hinter dem Szintillatorschirm angeordnet ist, stark zu.

Die Aufgabe der vorliegenden Erfindung besteht darin, ein kompakteres Konzept zur Erfassung eines Bildes von einer flächigen Bildquelle zu schaffen.

Diese Aufgabe wird durch eine Vorrichtung zur Erfassung eines Bildes gemäß Patentanspruch 1, ein Verfahren zur Erfassung eines Bildes gemäß Patentanspruch 6 oder ein Verfahren zum Herstellen einer Erfassungsvorrichtung gemäß Patentanspruch 7 gelöst.

Die Vorrichtung zur Erfassung eines Bildes umfasst eine Bildquelle, eine Spiegelanordnung zum Umlenken von Strahlung, die von der Bildquelle erzeugbar ist, und einen Detektor zum Aufnehmen einer durch die Spiegelanordnung umgelenkten Strahlung, wobei die Spiegelanordnung einen ersten Spiegel, der angeordnet ist, um die von der Bildquelle erzeugte Strahlung zu reflektieren, und einen zweiten Spiegel aufweist, der angeordnet ist, um eine von dem ersten Spiegel reflektierte Strahlung zu reflektieren, wobei der erste Spiegel und der zweite Spiegel voneinander beabstandet sind und zueinander parallel sind oder einen Winkel kleiner als 90° bilden

Erfindungsgemäß ist die Spiegelanordnung ausgebildet, um zumindest einen Teil von Röntgenstrahlung, die eine Szintillatorschicht durchdringt, vor dem Detektor abzuschirmen, derart, dass Röntgenstrahlung, die durch die Szintillatorschicht hindurchtritt, nicht direkt zu dem Detektor gelangen kann, sondern durch den ersten Spiegel und den zweiten Spiegel hindurchtreten muss und dabei wenigstens geschwächt wird, derart, dass der Detektor durch die Spiegelanordnung vor Röntgenstrahlung geschützt wird.

Insbesondere dann, wenn die Bildquelle flächig ist und als Szintillator ausgebildet ist, und die Vorrichtung zur Erfassung als Röntgenkamera ausgebildet ist, wird für eine kompakte Implementierung die äußere Abmessung der Röntgenkamera in zwei Dimensionen, also der Länge und der Breite in etwa der Länge und Breite des Szintillators entsprechen. Die Tiefe wird dagegen von der Spiegelanordnung und dem Detektor bestimmt. Der Szintillator stellt im Hinblick auf seine Länge und Breite ein wesentliches Element einer Aufnahmevorrichtung dar. Ist der Szintillator größer, also länger und/oder breiter, so wird auch eine größere Kamera akzeptiert. Wird dagegen der Szintillator kleiner, also schmäler und kürzer, so soll auch die Abmessung der Kamera abnehmen. Um zu erreichen, dass die Abmessung der Kamera in zwei Dimensionen im Wesentlichen durch die Abmessung des Szintillatorschirms in den beiden Dimensionen bestimmt wird, wird gemäß der vorliegenden Erfindung der Detektor gegenüber einer Bildquelle und vorzugsweise sogar im Strahlengang der Bildquelle angeordnet.

Um jedoch eine Entkopplung des Detektors von der Bildquelle für den Fall zu schaffen, dass die Bildquelle ein Szintillator ist und für den Detektor schädliche Röntgenstrahlen vorhanden sind, wird eine Spiegelanordnung zwischen den Detektor und die Bildquelle gesetzt, die ausgebildet ist, um Strahlung, die von der Bildquelle ausgegeben wird, umzulenken und auf den Detektor zu werfen.

Beispielhaft ist die Bildquelle eine flächige Bildquelle, die eine ebene oder gekrümmte (z. B. zylindrisch) Fläche haben kann, die die zu detektierende Strahlung emittiert. Die Bildquelle wird lediglich beispielhaft als Szintillator beschrieben. Auch andere Bildquellen, wie z. B. Spiegel oder Bildschirme beliebiger Art können ebenfalls als Bildquelle eingesetzt werden. Auch in diesen Fällen ist es von Vorteil, wenn die Abmessungen der Kamera in zwei Dimensionen, also Länge und Breite, durch die Abmessungen der Bildquelle in diesen Dimensionen festgelegt wird.

Die Spiegelanordnung umfasst insbesondere einen ersten Spiegel, der ausgebildet ist, um von der flächigen Bildquelle emittiertes Licht zu reflektieren. Die Spiegelanordnung umfasst ferner einen zweiten Spiegel, der angeordnet ist, um das von dem ersten Spiegel reflektierte Licht erneut zu reflektieren. Der erste und der zweite Spiegel sind voneinander beabstandet und zueinander parallel oder in einem spitzen Winkel zueinander angeordnet.

Damit tritt jede Strahlung, wie beispielsweise Röntgenstrahlung, die von den Spiegeln nicht abgelenkt wird, auf einen Spiegel und wird durch den Spiegel bereits gedämpft, ohne dass weitere Maßnahmen zur Abschirmung erforderlich sind.

Beispielhaft ist die Spiegelanordnung ausgebildet, um wenigstens 30 % (z. B. für harte Strahlung) oder sogar 80 % (z. B. für weiche Strahlung) der auf die Spiegelanordnung auftreffenden Strahlung vor dem empfindlichen optischen Detektor abzuschirmen. Je nach Energie der Röntgenstrahlung sollte mehr oder weniger abgeschirmt werden. Sehr harte, d.h. energiereiche, Strahlung mit hoher Frequenz ist dabei aufgrund der geringen Absorption für den optischen Detektor (Detektoroptik und lichtempfindlicher Sensor) weniger kritisch als weiche Strahlung, also Strahlung mit geringerer Energie und geringerer Wellenlänge. Allerdings kann weichere Strahlung auch leichter abgeschirmt werden, so dass für jeden Anwendungsfall (insbesondere in Frequenzhinsicht) ein Optimum bei der Auslegung der Spiegelanordnung gefunden werden kann. Manchmal kann schon ein Spiegelglas vielleicht mit einer höheren Dicke und ein Abschirmungsglas an der Optik des Detektors ausreichen und in anderen Fällen sind tatsächlich klassische Abschirmungsmaterialien, wie Blei- oder Wismut-Materialien, nötig.

Für Anwendungen, bei denen die Röntgenstrahlenenergie nicht so besonders stark ist, kann dies bereits ausreichend sein, um sicherzustellen, dass ein empfindlicher Detektor keine zu große Strahlendosis erhält. Wird dagegen mit höherer Strahlungsenergie gearbeitet, so können die Spiegel speziell ausgebildet sein, um eine Abschirmung für Röntgenstrahlen zu liefern, wobei Abschirmungsmaterialien für Röntgenstrahlen z. B. Blei oder Wolfram sind.

Im Gegensatz zu Spiegeln, die aus einer beschichteten Glasscheibe bestehen können, sind solche "abgeschirmten" Spiegel solche Spiegel, die aus einer beschichteten (z. B. Glas-) Scheibe bestehen können, die auf einem Abschirmungsmaterial aufgebracht ist, das sich von der Scheibe unterscheidet und eine höhere Röntgenstrahlenabschirmungswirkung als die Scheibe hat. Alternativ kann ein solcher abgeschirmter Spiegel auch ein Spiegel sein, bei dem eine Oberfläche eines bereits gut abschirmenden Materials bearbeitet ist, um als optischer Spiegel zu wirken. Ein solches gut abschirmendes Material ist Blei oder Wolfram oder ein anderes Material, das eine bessere Röntgenstrahlenabschirmungseigenschaft als Glas hat, wenn zwei Materialscheiben mit gleicher Dicke verglichen werden.

Das sandwichartige Aufnehmen der Spiegelanordnung zwischen dem Detektor und der flächigen Bildquelle führt zu einem kompakten und einfach herstellbaren und-damit auch aus dem Aspekt der Herstellungskosten effizienten System. Die gesamte Anordnung der Röntgenkamera kann anhand des Szintillators und des vom Szintillator emittierten Lichts ausgelegt werden, derart, dass ein kompakter Gegenstand erhalten wird, dessen Größe mit der Größe des Szintillators und damit mit dem inhärenten Qualitätsmerkmal skaliert.

Das Konzept der Verwendung von wenigstens zwei Spiegeln in der Spiegelanordnung eignet sich besonders gut für eine teilbereichsweise Abbildung eines Szintillators, die dann von Nöten ist, wenn der Szintillator besonders groß ist.

Eine Aufteilung des Szintillators in Teilbereiche, die von verschiedenen Spiegeln umgelenkt und auf eine spezielle Detektorkamera gerichtet werden, gelingt ohne weiteres durch einfaches Hinzufügen weiterer Spiegelpaare. Das einfache Aneinanderfügen weiterer Spiegelpaare ermöglicht es, ein Kamerakonzept für verschiedene Szintillatorgrößen zu haben, das ohne weiteres und ohne komplette Neuentwurfsnotwendigkeiten auf größere und kleinere Szintillatoren umgesetzt werden kann. Der modulare Aufbau kann einfach dadurch vorteilhaft verwendet werden, dass weitere Spiegelpaare und damit korrespondierende weitere Detektorkameras eingesetzt werden. In der dazu orthogonalen Richtung des zweidimensionalen Szintillators ist ebenfalls ein einfacher modularer Aufbau möglich, da ohne weiteres Detektorkameras nebeneinander angeordnet werden können, um Teilbereiche der Umlenkspiegel zu erfassen. Ein großer Szintillatorschirm kann daher mit einem Array an Detektorkameras abgebildet werden, wobei jede Detektorkamera letztendlich einen Teilbereich des Szintillatorschirms abbildet. Alternativ oder zusätzlich können auch mehrere kleinere Spiegel nebeneinander angeordnet werden, so dass ein Detektor immer einen kleinen Spiegel komplett aufzeichnet, aber jeder kleine Spiegel nur die Lichtstrahlung eines Teilbereichs der Bildquelle umlenkt. Es können auch mehrere größere Spiegel nebeneinander angeordnet werden, so dass eine Detektorkamera zum Beispiel nur einen Teilbereich eines Spiegels erfasst und ein Spiegel dennoch nicht das Licht der gesamten Bildquelle umlenkt, sondern nur Licht eines Teilbereichs, der jedoch größer als der Teilbereich ist, der letztendlich von einer Detektorkamera erfasst wird.

Beispielhaft werden zwei Spiegel Rücken an Rücken angeordnet, wobei die beiden Spiegel bereits aus einem gut abschirmenden Material bestehen können, wie es obenstehende beschrieben wurde, oder wobei die Spiegel auf der Vorderseite bzw. der Rückseite eines solchen absorbierenden Materials aufgebracht sind, dass also das absorbierende Material von einem Spiegelträgermaterial, wie. z. B. einer Glasscheibe eines klassischen Spiegels, unterschiedlich ist.

Mittels eines Computers können diese Einzelbilder dann zusammengesetzt werden, wobei es vorteilhaft ist, eine Überlappung der Teilbereiche sicherzustellen, damit auch bei kleineren Dejustierungen keine Bildverluste, also nicht aufgenommene Stellen des Szintillatorschirms, auftreten.

Dieses Beispiel ermöglicht daher die Aufteilung des Szintillatorschirms auf einfache Art und Weise in eine prinzipiell beliebige Anzahl optischer Kameras. Ohne Veränderung der Bautiefe kann eine beliebig große Szintillatorfläche auf eine entsprechend große Anzahl optischer Kameras abgebildet werden. Darüber hinaus ist die Abmessung bzw. sind die Ausmaße der Röntgenkamera in zwei Dimensionen sehr ähnlich zur Größe des Szintillatorschirms in diesen beiden Dimensionen, während dies bei einer seitlichen Anordnung der optischen Kameras nicht erreicht werden kann.

Es wird auf jede Kamera eine bestimmte Fläche des Szintillatorschirms abgebildet, wobei sich die Flächen geringfügig überlappen, um nach entsprechender Korrektur die gesamte Szintillatorfläche darstellen zu können.

Dieses Beispiel ermöglicht daher einen modularen Aufbau, so dass durch Hinzufügen weiterer Module in Form von weiteren Spiegelpaaren oder in Form von Detektorkameras, die unterschiedliche Bereiche von ein und demselben Umlenkspiegel erfassen, jede beliebige Größe und Form eines Szintillators abgebildet werden kann. Auf diese Weise kann eine Röntgenkamera aufgebaut werden, die der Größe und Form des Prüfobjekts, nach der sich letztendlich die Größe und Form des Szintillatorschirms richtet, angepasst ist.

Bevorzugte Ausführungsbeispiele der vorliegenden Erfindung werden nachfolgend Bezug nehmend auf die beiliegenden Zeichnungen detailliert erläutert. Es zeigen:
- Fig. 1a: eine Prinzipdarstellung der prinzipiellen Anordnung der einzelnen Elemente der erfindungsgemäßen Vorrichtung;
- Fig. 1b: eine schematische dreidimensionale Ansicht eines "Sandwich" aus Szintillator, Spiegelanordnung und Detektor;
- Fig. 2: eine vertikale Anordnung mit zwei parallelen Spiegeln in Seitenansicht, wobei senkrecht zur Zeichenebene beliebig viele Kameras in Reihen angeordnet sein können;
- Fig. 3: eine 2x2-Parallel-Spiegelanordnung in Seitenansicht, wobei senkrecht zur Zeichenebene wieder beliebig viele Kameras in Reihen angeordnet sein können;
- Fig. 4: eine vertikale Anordnung mit zwei parallelen Spiegeln und Blenden/Abschirmungen zur Reduzierung von Röntgenstreustrahlung bzw. des Öffnungswinkels für direkte Strahlung in Seitenansicht, wobei senkrecht zur Zeichenebene wiederum beliebig viele Kameras in Reihen angeordnet sein können;
- Fig. 5: eine prinzipielle Anordnung einer Röntgenkamera mit einem Sensor seitlich zum Szintillator; und
- Fig. 6: eine bekannte Anordnung einer Röntgenkamera mit V-förmiger Spiegelanordnung und seitlich angebrachten Lichtsensoren.

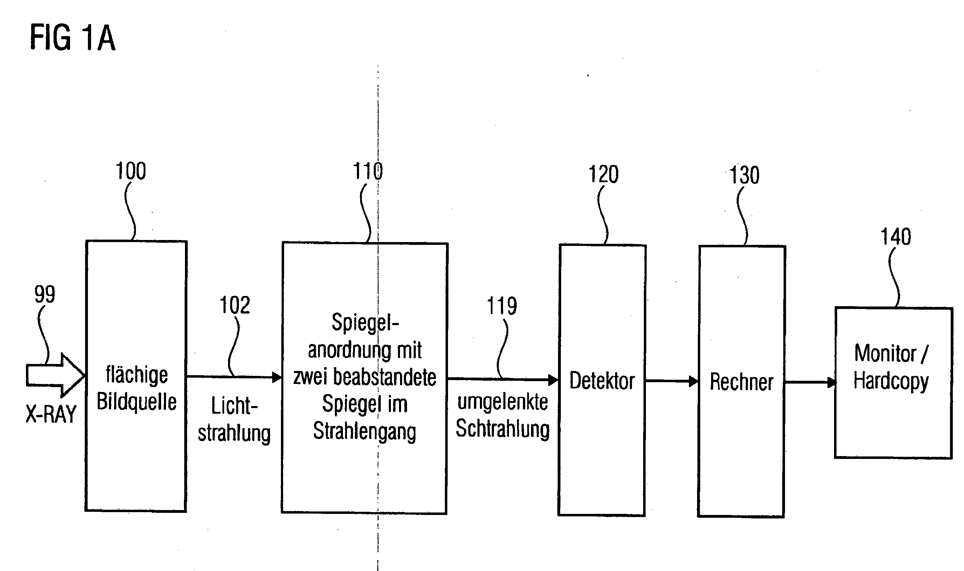

Fig. 1a zeigt eine schematische Darstellung der Vorrichtung zur Erfassung eines Bildes. Die Vorrichtung zur Erfassung eines Bildes umfasst eine flächige Bildquelle 100 und eine Spiegelanordnung 110 zum Umlenken von Strahlung, die von der Bildquelle 100 erzeugbar ist. Die Lichtstrahlung, die von der flächigen Bildquelle 100 erzeugt wird, ist bei 102 schematisch dargestellt. Die Spiegelanordnung 110 empfängt also eingangsseitig die Lichtstrahlung 102 und gibt eine umgelenkte Lichtstrahlung 119 aus, die auf einen Detektor 120 fällt. Der Detektor ist ausgebildet, um das durch die Spiegelanordnung 110 umgelenkte Licht bzw. die umgelenkte Strahlung 119 aufzunehmen. Ausgangsseitig kann der Detektor 120 mit einem Rechner 130 verbunden sein, welcher das durch die flächige Bildquelle 100 erzeugte Bild über einen Monitor bzw. einen Drucker in Form einer Druckkopie (Hardcopy) oder als File (Softkopie) ausgibt. Das Gerät 140 kann somit ein Speicher, ein Bildschirm, ein Drucker oder z. B. auch eine Kommunikationsschnittstelle sein, um das Bild zu einem entfernt angeordneten Drucker oder Monitor zu übertragen, damit es dort schließlich ausgegeben wird. Alternativ oder zusätzlich kann auch anschließend an die Zusammensetzung der Einzelbilder eine automatische Auswertung stattfinden und das Auswertungsergebnis ausgegeben werden. Ferner kann auch eine Auswertung in Form einer Computertomographie stattfinden, dass also eine Darstellung auf der Basis von Schnittbildern erzeugt wird.

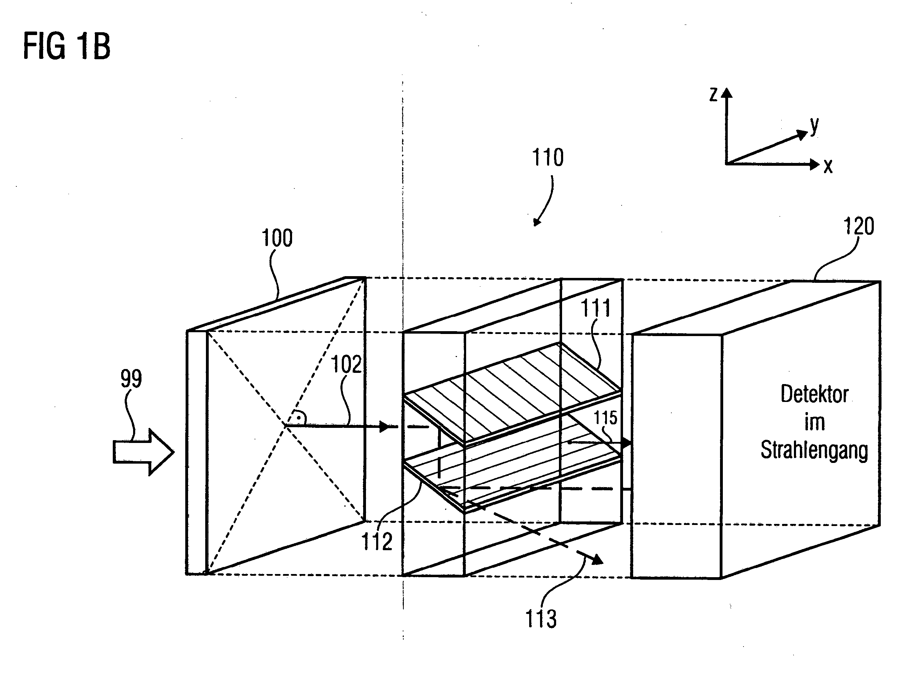

Nachfolgend wird Bezug nehmend auf Fig. 1b auf eine spezielle Ausführungsform der Spiegelanordnung 110 eingegangen. Insbesondere umfasst die Spiegelanordnung 110 zwei beabstandete Spiegel, wobei insbesondere ein erster Spiegel 111 angeordnet ist, um das von der flächigen Bildquelle 100 stammende Licht bzw. die von der flächigen Bildquelle 100 stammende Strahlung 102 zu reflektieren. Insbesondere ist der erste Spiegel 111 so angeordnet, dass er das Licht nicht direkt zurückreflektiert, sondern auf einen zweiten Spiegel 112 reflektiert, wobei der zweite Spiegel 112 angeordnet ist, um das von dem ersten Spiegel reflektierte Licht erneut zu reflektieren.

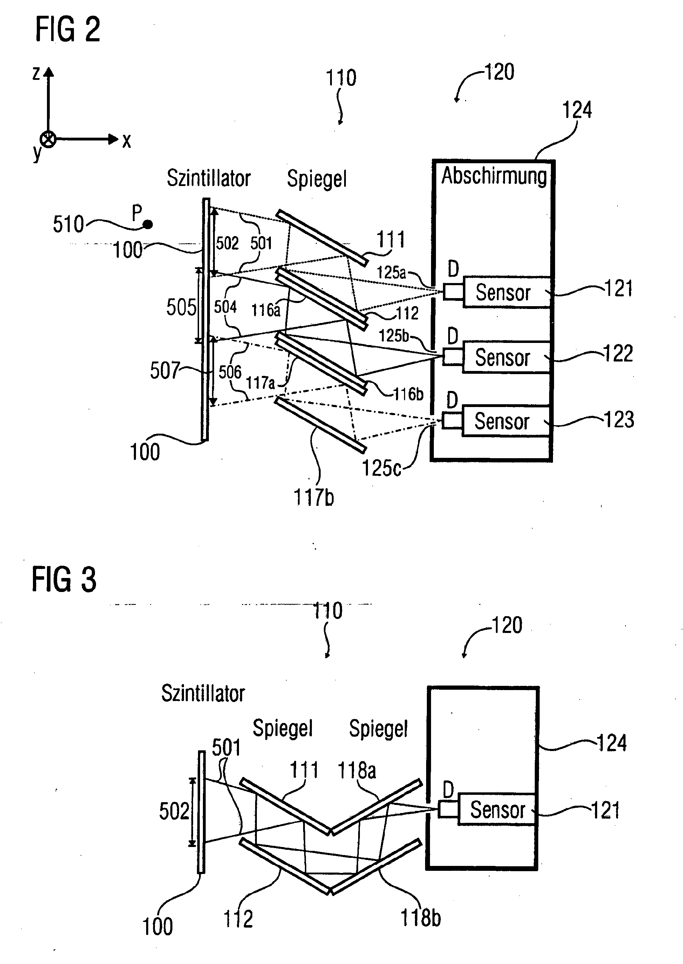

Wie es in Fig. 1b gezeigt ist, sind der erste und der zweite Spiegel 111, 112 voneinander beabstandet und zueinander parallel oder in einem spitzen Winkel angeordnet, der kleiner als 90° ist. Damit wird sichergestellt, dass das von dem zweiten Spiegel 112 reflektierte Licht in Richtung des Detektors 120 reflektiert wird. So können auch weitere Spiegel in der Spiegelanordnung 110 angeordnet sein, die in Fig. 1b nicht gezeigt sind, auf die jedoch noch Bezug nehmend auf z. B. Fig. 3 eingegangen wird. Die Spiegelanordnung ist so, dass das von dem zweiten Spiegel 112 reflektierte Licht wenigstens eine Komponente hat, die entlang der Richtung vom Schirm 100 zum Detektor 120 gerichtet ist. Wäre der Spiegel 112 daher etwas weiter nach unten geklappt, so würde das von dem zweiten Spiegel 112 reflektierte Licht z. B. eine Richtung haben, wie sie bei 113 eingezeichnet ist. Die Strahlung 113 hat daher eine parallel zum Vektor 102 vorhandene Komponente und zusätzlich eine in Fig. 1b nach unten gerichtete Komponente. Um eine solche Strahlung zu detektieren, müsste der Detektor 120 in Fig. 1b etwas weiter unten angeordnet sein.

Auf ähnliche Art und Weise könnte der zweite Spiegel 112 im Vergleich zur parallelen Anordnung von Fig. 1b etwas nach oben gekippt sein, so dass eine von dem zweiten Spiegel 112 ausgegebene Strahlung nach oben bezüglich des Vektors 102 gerichtet wäre. Dann könnte der Detektor 120 etwas weiter oben angeordnet werden, um diese Strahlung ebenfalls zu detektieren. Die Anordnung der beiden Spiegel 111, 112 muss daher nicht unbedingt parallel sein, sondern sollte zumindest so sein, dass zwischen den beiden Spiegeln ein spitzer Winkel ist, der also kleiner als 90° ist, damit die von dem zweiten Spiegel 112 ausgegebene Strahlung wenigstens eine Komponente in Richtung des Vektors 102, der der Normalenvektor auf der flächigen Bildquelle 100 ist, hat. Je größer die zum Vektor 102 parallele Komponente der durch den zweiten Spiegel 112 ausgegebenen Strahlung ist, umso kompakter kann die gesamte Vorrichtung einschließlich flächiger Bildquelle 100 und Detektor ausgebildet werden, wobei ein Winkel zwischen beiden Spiegeln zwischen 0 und 80° speziell bevorzugt wird.

Die beiden Spiegel 111, 112 haben den Vorteil, dass sie eine "Sichtverbindung" zwischen dem Detektor 120 und der flächigen Bildquelle 100 verdecken, dass jedoch dennoch das von der flächigen Bildquelle 100 zum Detektor 120 geführte Licht detektierbar ist, also durch die beiden Spiegel 111, 112 nicht abgeschattet wird.

Insbesondere dann, wenn die flächige Bildquelle 100 ein Szintillator ist, der auf seiner in Fig. 1b hinteren Seite durch eine Röntgenstrahlung 99 angeregt wird, wird damit erreicht, dass der Detektor 120, trotz der Tatsache, dass er im Strahlengang angeordnet ist, vor den Röntgenstrahlen 99 geschützt wird. Röntgenstrahlen, die durch den Szintillator 100 hindurch treten, können nicht direkt zum Detektor gelangen, sondern müssen die beiden Spiegel 111, 112 durchdringen. Bei typischen Anordnungen sind die Spiegel 111, 112 lediglich für von dem Szintillator 102 emittierte Lichtstrahlen im sichtbaren Bereich reflektiv. Die Röntgenstrahlen 99 werden jedoch durch die Spiegel 111, 112 nicht reflektiert, sondern gestreut oder absorbiert. Damit ist zwischen der Spiegelanordnung 110 und dem Detektor 120 das Verhältnis zwischen der Intensität der Lichtstrahlung 115 und der Röntgenstrahlung größer als zwischen der Spiegelanordnung 110 und der flächigen Bildquelle 100. Dies -liegt daran, dass durch die Spiegelanordnung die Röntgenstrahlung stärker gedämpft wird als die sichtbare (Nutz-) Strahlung. Der Detektor 120, der beispielsweise ein Detektor auf der Basis eines Halbleiterchips wie beispielsweise ein Detektor mit einer CCD-Kamera ist, wird daher durch die Spiegelanordnung 110 vor der Röntgenstrahlung 99 geschützt, die dazu verwendet wird, um den Szintillator 100 anzuregen, damit derselbe die Nutzstrahlung 102 emittiert. Allgemein fällt auf den Szintillator 100 daher von der Rückseite eine Strahlung mit kurzer Wellenlänge, und der Szintillator 100 emittiert eine Strahlung 102 mit einer oder mehreren Wellenlängen, die um einen Faktor von wenigstens 10 länger sind als die Wellenlänge der Strahlung hinter dem Szintillator, wobei die Spiegel 111, 112 für die kurzwellige Strahlung dämpfend wirken und für die längerwellige Strahlung reflektierend wirken bzw. für die längerwellige Strahlung stärker reflektierend wirken als für die kurzwellige Strahlung.

Das in Fig. 1a und 1b dargestellte Konzept für eine Vorrichtung zur Erfassung eines von einer flächigen Bildquelle wie beispielsweise eines Szintillatorschirms erzeugten Bildes kann vorzugsweise zur Aufteilung des Szintillatorschirms auf eine beliebige Anzahl optischer Kameras eingesetzt werden. Der Vorteil dieses Konzepts besteht darin, dass ohne Veränderung der Bautiefe eine beliebig große Szintillatorfläche auf eine entsprechend große Anzahl optischer Kameras aufgeteilt werden kann, und dennoch die Ausmaße der Röntgenkamera in Länge und Breite im Wesentlichen der Größe des Szintillatorschirms in Länge und Breite entspricht, während dies im Stand der Technik nicht erreicht wird, da dort die optischen Kameras seitlich bezüglich des Szintillatorschirms angeordnet werden. Bei der vorliegenden Erfindung wird vorzugsweise auf jede Kamera eine bestimmte Fläche des Szintillators abgebildet, wobei sich die Flächen geringfügig überlappen, um nach entsprechender Korrektur die gesamte Szintillatorfläche darstellen zu können wobei diese Korrektur und das Zusammensetzen der Einzelbilder der einzelnen Detektorkameras in dem Rechner 130 von Fig. 1a erfolgen kann. Damit wird ein modularer Aufbau ermöglicht, bei dem durch Hinzufügen weiterer Module prinzipiell jede beliebige Größe und Form des Szintillators abgebildet werden kann. Auf diese Weise kann eine Röntgenkamera aufgebaut werden, die der Größe und Form des Prüfobjekts, also des Objekts, das durch die Röntgenstrahlung 99 durchstrahlt wird, angepasst ist.

Fig. 1b zeigt eine Anordnung mit zwei Spiegeln 111, 112, wobei in dem Detektor in y-Richtung ebenfalls eine oder z. B. mehrere Kameras angeordnet werden können, um somit eine Kamerazeile zu haben. Dann bildet jede einzelne Kamera einen Teilbereich des von dem Spiegel 112 ausgegebenen Lichts 115 ab, wobei dieser Teilbereich ein Teilbereich in y-Richtung in Fig. 1b ist.

Fig. 2 zeigt eine alternative Anordnung, bei der mehrere Spiegelpaare in z-Richtung angeordnet sind, wobei ferner mehrere Sensoren in z-Richtung ebenfalls angeordnet sind, um jeweils das von dem zweiten Spiegel eines Spiegelpaars reflektierte Licht zu erfassen. Insbesondere ist in Fig. 2 eine gestrichelte Linienführung eingezeichnet, die bei 501 gezeigt ist und die den Bereich 502 des Szintillators in z-Richtung andeutet, der durch das erste Spiegelpaar 111, 112 erfasst und auf eine erste Detektorkamera 121 richtet. Ein zweiter Teilbereich in z-Richtung, der mit 505 bezeichnet ist, wird durch ein zweites Spiegelpaar, das einen dritten Spiegel 116a und einen vierten Spiegel 116b aufweist, erfasst und auf einen zweiten Sensor 122 abgebildet. Der Abbildungs-"Vorgang" wird durch die durchgezogene Linienführung 504 angedeutet. Ein fünfter Spiegel 117a und ein sechster Spiegel 117b bilden ein drittes Spiegelpaar, das einen Bereich 507 des Szintillators in z-Richtung abbildet, wobei der Abbildungsvorgang durch die strichpunktierte Linienführung 506 angedeutet ist, um diesen Bereich 507 auf den dritten Sensor bzw. die dritte Sensorkamera 123 abzubilden. Der Detektor 120 umfasst somit drei Detektorkameras 121, 122, 123, wobei darauf hingewiesen wird, dass in y-Richtung nicht unbedingt eine einzige Detektorkamera vorhanden sein muss, sondern typischerweise mehrere Detektorkameras vorhanden sein können, derart, dass der Detektor 120 ein Array von Detektorkameras aufweist, wobei die Einzelbilder der Detektorkameras durch den Rechner 130 in ein Gesamtbild zusammengesetzt werden.

Ferner ist in Fig. 2 angedeutet, dass sich die Bereiche des Szintillators, die jeweils durch ein Spiegelpaar auf eine Kamera abgebildet werden bzw. die auf eine Kamerazeile abgebildet werden, sich etwas überlappen. Die Überlappung ergibt sich aufgrund der Überlappung bzw. Überschneidung des Bereichs 502 mit dem Bereich 505 und aufgrund der Überlappung des Bereichs 505 mit dem Bereich 507.

In Fig. 2 sind sämtliche sechs Spiegel parallel zueinander angeordnet, wobei der Spiegel 116a an der Rückseite des Spiegels 112 angebracht ist. Dasselbe gilt für den vierten Spiegel 116b und den fünften Spiegel 117a. Beide Spiegel sind wieder mit ihren Rückseiten aneinander anstoßend angeordnet. Eine spezielle Implementierung für das Element mit dem zweiten Spiegel 112 und dem dritten Spiegel 116a besteht darin, dass ein Träger vorgesehen ist, der auf seiner oberen Oberfläche verspiegelt ist, um den Spiegel 112 zu bilden, und der auf seiner unteren Oberfläche ebenfalls verspiegelt ist, um den Spiegel 116a zu bilden. Diese Verspiegelung kann durch eine spezielle Oberflächenbehandlung des Trägers bzw. Oberflächenbeschichtung des Trägers erreicht werden. Ähnlich kann auch der Träger für den vierten Spiegel 116b und den fünften Spiegel 117a implementiert sein, dass also obere und untere Oberfläche entsprechend behandelt oder beschichtet sind, um die Spiegel 116b, 117a zu implementieren.

Der Szintillatorschirm wird bei dem in Fig. 2 gezeigten Beispiel in der Weise auf mehrere optische Kameras abgebildet, dass nur das vom Szintillator ausgehende sichtbare Licht auf die optischen Kameras fällt und gegebenenfalls durch den Szintillator hindurch tretende Röntgenstrahlung keine Strahlenschäden in den Sensoren 121, 122, 123 verursachen kann. Hierzu werden im optischen Weg jeder Kamera, wie in Fig. 2 gezeigt, jeweils zwei Spiegel 111, 112 bzw. 116a, 116b bzw. 117a, 117b parallel zueinander in der Weise angeordnet, dass das von einer Teilfläche des Szintillators ausgehende sichtbare Licht zur Kamera gelangt, für Röntgenstrahlung jedoch kein direkter "offener" Weg zur Kamera existiert. Die direkte Röntgenstrahlung muss auf ihrem Weg zur Kamera vielmehr zumindest einen der Spiegel oder, wie es noch dargelegt wird, Doppelspiegelanordnungen durchqueren. Für Röntgenstreustrahlung sind die Verhältnisse unterschiedlich, die Röntgenstreustrahlung ist jedoch schwächer als die direkte Strahlung.

Um die Abschwächung der Röntgenstrahlung bei ihrem Weg durch die Spiegel noch zu verstärken, wird es bevorzugt, die Spiegel auf ihrer Rückseite mit einer ausreichend dicken Absorberschicht, wie beispielsweise Blei, zu versehen, um die Röntgenstrahlung wirksam zu schwächen. Wie es Fig. 2 zu entnehmen ist, wird für nicht am Rand liegende Kameraanordnungen anstelle eines Einzelspiegels zur periodischen Fortsetzung der Anordnung ein Doppelspiegel benötigt bzw. ein auf beiden Seiten verspiegelter Träger. Dieser Träger wird bei einem Ausführungsbeispiel aus einem Material mit hohem Absorptionsvermögen für Röntgenstrahlung und ausreichender mechanischer Stabilität gebildet. Ein solches Material ist beispielsweise Wolfram oder Blei. Alternativ kann zwischen beiden Spiegeln der Doppelspiegelanordnung, also zwischen den Spiegeln 112, 116a bzw. 116b und 117a, wiederum eine entsprechend ausgelegte Absorberschicht, beispielsweise aus Blei, angebracht werden.

Um bessere Sicherheit gegenüber der Streustrahlung zu haben, wird es ferner bevorzugt, die Detektoranordnung 120 abzuschirmen, wie es bei 124 in Fig. 2 gezeigt ist. Die Abschirmung 124 kann beispielsweise eine Bleiabschirmung oder eine andere Röntgenstrahlen dämpfende Abschirmung sein. Lediglich Bereiche 125a, 125b, 125c, an denen die sichtbare Strahlung in die Abschirmung 124 eintreten kann, sind offen bzw. sind für die optische Strahlung transparent, während eine Transparenz für optische Strahlung außerhalb dieser Bereiche nicht erforderlich ist und auch nicht implementiert wird, da Röntgenstrahlen-Abschirmungen preisgünstig implementierbar sind, wenn sie nicht optisch transparent sein müssen.

Abhängig von der Strahlrichtung, also der Position der Röntgenquelle in Relation zur Mittelsenkrechten des Szintillators, existieren bei der Doppelspiegelanordnung jedoch für Röntgenstrahlung direkte offene Wege zu einer optischen Kamera. Ist die Röntgenstrahlung nämlich z. B. an einer Position P510 angeordnet, so können Röntgenstrahlen, die an der Position P510 austreten, in den Sensor 123 eintreten, ohne dass diese Röntgenstrahlen durch eine Doppelspiegelanordnung gedämpft worden sind. Um eine Schädigung des Sensors 123 zu unterbinden, wird es bevorzugt, diesen direkten Weg zu vermeiden. Eine Art und Weise zur Vermeidung dieses direkten Weges besteht darin, dass nicht beliebige Anordnungen zwischen Röntgenstrahlenquelle und Szintillator zugelassen werden, sondern dass lediglich Anordnungen der Röntgenstrahlenquelle hinter einem mittleren Bereich des Szintillators zugelassen werden, der z. B. dem Bereich 505 entsprechen kann.

Um jedoch eine variablere Anordnungsmöglichkeit der Röntgenstrahlenquelle bezüglich des Szintillators zu haben und um ferner sicherer gegenüber Streustrahlung zu sein, wobei die Streustrahlung jedoch in ihrer Intensität erheblich geringer ist als die zwischen Szintillator und Spiegelanordnung existierende Röntgenstrahlenintensität, wird bei dem in Fig. 2 gezeigten Ausführungsbeispiel die Abschirmung 124 vorgesehen, die nur dort unterbrochen ist (125a, 125b, 125c), wo dies zur optischen Abbildung erforderlich ist. An den Stellen, wo das Abschirmgehäuse für die optische Strahlung unterbrochen werden muss, erfolgt vorzugsweise ferner eine Abschirmung vor Röntgenstrahlen dadurch, dass im optischen Strahlengang ein spezielles Glas angeordnet ist, das für sichtbares Licht transparent ist, Röntgenstrahlung jedoch stark absorbiert. Ein solches Glas ist beispielsweise Bleiglas.

Eine weitere Möglichkeit zur Abschirmung besteht darin, dass die Optik der Sensorkameras 121, 122, 123 aus einem entsprechenden Spezialglas, wie beispielsweise Bleiglas, gefertigt wird, so dass die abbildende Optik Röntgenstrahlung absorbiert, für sichtbares Licht jedoch transparent ist. Je nach Implementierung kann diese Vorgehensweise jedoch nachteilhaft sein, da zur Zeit verfügbares Spezialglas mit hoher Röntgenabsorption auch einen Teil des sichtbaren Lichtes absorbiert. Sind jedoch die Intensitäten des von dem Szintillator emittierten sichtbaren Lichts ausreichend groß, so reicht die von den Detektorkameras detektierte Strahlung, um ein Bild mit ausreichendem Signal/Rausch-Verhältnis zu erzeugen.

Eine weitere Implementierung zur Reduzierung der Röntgenstrahlung nach der Doppelspiegelanordnung ist in Fig. 3 gezeigt. Hier ist ein weiteres Spiegelpaar 118a, 118b angeordnet, wobei der erste Spiegel 118a des weiteren Spiegelpaars angeordnet ist, um das von dem zweiten Spiegel 112 der Spiegelanordnung reflektierte Licht umzulenken, und wobei der zweite Spiegel 118b des weiteren Spiegelpaares angeordnet ist, um das von dem ersten Spiegel 118a des weiteren Spiegelpaares umgelenkte Licht in Richtung des Detektors 121 umzulenken. Es wird also eine weitere bzw. in Fig. 3 nicht gezeigte mehrere weitere Doppelspiegelanordnungen in den optischen Strahlengang gesetzt. Hierdurch besteht für beliebige Anordnungen der Röntgenquelle bezüglich der Kamera kein direkter Weg mehr von dem Sensor zu einer vor dem Szintillatorschirm angeordneten Röntgenquelle.

Dies liegt daran, dass die beiden Spiegelanordnungen direkte Wege von der Röntgenquelle hinter dem Szintillatorschirm zu den aktiven Detektorbereichen verdecken, was z. B. erreicht wird, dadurch, dass sich der erste Spiegel 111 und der erste Spiegel 118a des weiteren Spiegelpaars berühren, und dass sich der zweite Spiegel 112 und der zweite Spiegel 118b der weiteren Spiegelanordnung ebenfalls berühren. Auch wenn sich die beiden Spiegel nicht berühren, so kann in dem Bereich, wo die Spiegel nicht zur Reflexion benötigt werden, eine Abschirmung angeordnet sein, derart, dass kein direkter Weg von einer Röntgenquelle hinter dem Szintillator 100 ohne dazwischen liegende Abschirmung auf den Sensor 121 möglich ist. Wie in Fig. 2 lässt sich die in Fig. 3 gezeigte Anordnung nach oben, also in z-Richtung, sowie in y-Richtung, also vertikal zur Zeichenebene, beliebig fortsetzen. Da die Röntgenstrahlung nunmehr nur nach mehrfacher Streuung zu einer Kamera gelangen kann, ist deren Intensität bei dieser Anordnung gegenüber einer einfachen Doppelspiegelanordnung erheblich reduziert. Je nach Implementierung können auch die bei dieser Anordnung nicht unbedingt nötigen weiteren Abschirmmaßnahmen, wie sie in Verbindung mit Fig. 2 beschrieben worden sind, ebenfalls zusätzlich ausgeführt werden.

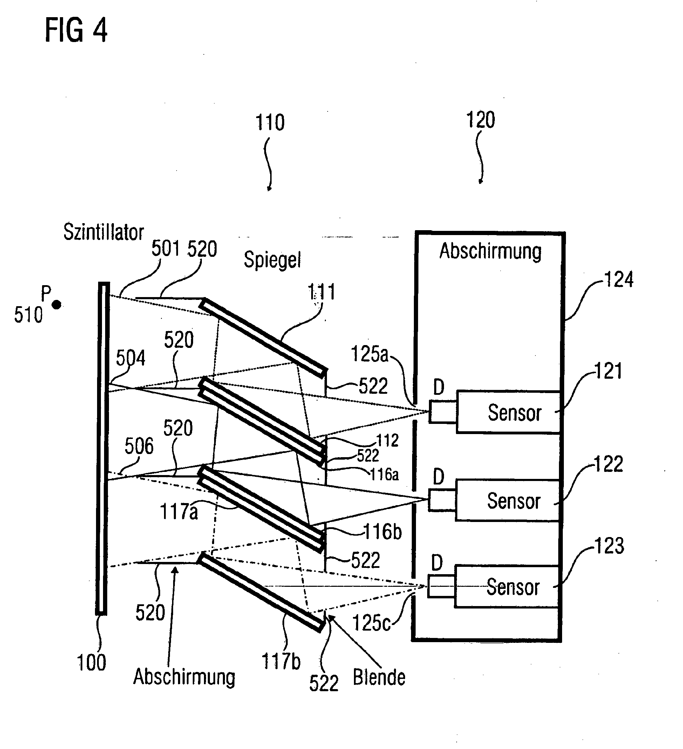

Ein weiteres Beispiel zur Reduzierung der Röntgenstrahlung ist in Fig. 4 gezeigt. Hier werden vor dem ersten Spiegel und/oder nach dem zweiten Spiegel Abschirmungen 520 bzw. Blenden 522 vorgesehen. Insbesondere werden auf der Spiegelseite, die zum Szintillator 100 gerichtet ist, Abschirmungen 520 vorgesehen, und/oder werden auf der Spiegelseite, die zu dem Detektor 120 hin gerichtet ist, Blenden 522 vorgesehen. Vorzugsweise sind die Abschirmungen 520 und die Blenden 522 aus einem Röntgenstrahlen absorbierenden Material, wie beispielsweise Blei. Auch ein alternatives Material als Blei kann vorgesehen sein, solange es eine Röntgenstrahlen absorbierende Wirkung hat, wie beispielsweise Wolfram. In Fig. 4 ist die Anordnung der Abschirmungen bzw. Blenden in Bezug auf die Strahlengänge 501, 504, 506 gezeigt. Es ist ersichtlich, dass die Strahlengänge 501, 504, 506 durch die Abschirmungen 520 und die Blenden 522 nicht beeinträchtigt werden. Ein Teil der Röntgenstreustrahlung, die von den Blenden auf den ersten Spiegel gelangen könnte, wird hierdurch absorbiert. Außerdem wird der Winkelbereich, aus dem Röntgenstrahlung direkt auf eine Kamera treffen würde, reduziert. So wird beispielsweise der direkte Weg der Röntgenstrahlenquelle am Punkt P510 zum unteren Sensor 123 durch die zweite Abschirmung 520 wirksam unterbrochen.

Es sei darauf hingewiesen, dass die in Fig. 4 gezeigte speziell abgeschirmte Anordnung mit den Abschirmungen 520 und den Blenden 522 (wobei bei bestimmten Anordnungen auch entweder Blenden 522 oder Abschirmungen 520 ausreichend sein können), im Hinblick auf eine kompakte Bauweise zu bevorzugen ist. Dies liegt daran, dass hier ein großer Bereich existiert, in dem die Röntgenquelle bezüglich des Szintillators 100 angeordnet werden kann, ohne dass ein direkter offener Weg zu einer oder mehreren optischen Kameras existiert. Insbesondere wird die in Fig. 4 gezeigte Anordnung dann ausreichend sein, wenn die Röntgenquelle in hinreichend großem Abstand entlang der Mittelsenkrechten des Szintillatorschirms angebracht ist, was bei den meisten technischen Anwendungen üblich ist. Wenn in dem in Fig. 4 gezeigten Ausführungsbeispiel ferner ein Spezialglas zur Absorption der Röntgenstrahlen in den Bereichen 125a, 125b, 125c oder in der Optik der Sensorkameras erforderlich ist, kann jedoch die durch dieses Spezialglas bewirkte Absorption im Vergleich zu der in Fig. 3 dargestellten Anordnung, die ohne ein solches Spezialglas auskommen kann, nachteilhaft sein. Viele Spezialgläser haben nämlich den Nachteil, dass sie über der Zeit eine höhere Dämpfung entwickeln, da sie aufgrund der Röntgenstrahlung einen "Bräunungseffekt" aufweisen.

Dies wird insbesondere dann der Fall sein, wenn die durch die Doppelspiegelanordnung erzeugten Reflexionsverluste kleiner sind als die Verluste durch das Spezialglas, und wenn die in Fig. 3 größere Bautiefe einen Einsatz einer solchen Kamera nicht verbietet. Es kann also die optische Absorption der in Fig. 4 gezeigten Anordnung einschließlich Spezialglas zur Absorption der Röntgenstrahlung gegen die Reflexionsverluste einer weiteren Doppelspiegelanordnung gemäß Fig. 3 abzuwägen sein. Bei sehr hoher Strahlungsenergie kann daher auch eine Anordnung nach Fig. 3 vorteilhaft sein.

Bei einem erfindungsgemäßen Verfahren zum Erfassen eines Bildes wird zunächst von einer flächigen Bildquelle Strahlung emittiert, welche dann in der Spiegelanordnung umgelenkt und im Detektor detektiert wird, wobei beim Umlenken die beiden Spiegel 111, 112 eingesetzt werden, und wobei diese Spiegel derart beabstandet sind, dass sie zueinander parallel sind oder einen Winkel kleiner als 90° bilden. Zur Herstellung einer solchen Vorrichtung werden daher Bildquelle, Detektor und Spiegelanordnung zueinander angebracht, wobei wiederum die beiden Spiegel 111, 112 zueinander parallel oder in einem Winkel kleiner 90° zueinander angeordnet sind, damit das von dem zweiten Spiegel 112 reflektierte Licht 115 parallel zum von der flächigen Bildquelle reflektierten Licht 102 ist oder zumindest eine Komponente hat, die parallel zu der durch den Vektor 102 bezeichneten Richtung verläuft.

Erfindungsgemäß wird im Schritt des Emittierens eine Szintillatorschicht durch Röntgenstrahlung angeregt, um die emittierte Strahlung zu erzeugen, und im Schritt des Umlenkens ein Abschirmen der Röntgenstrahlung vor dem Detektor durchgeführt, derart, dass Röntgenstrahlung, die durch die Szintillatorschicht hindurchtritt, nicht direkt zu dem Detektor gelangen kann, sondern durch den ersten Spiegel und den zweiten Spiegel hindurchtreten muss und dabei wenigstens geschwächt wird, derart, dass der Detektor durch die Spiegelanordnung vor Röntgenstrahlung geschützt wird.

Der Rechner 130 ist ausgebildet, um die Einzelbilder zu einem Gesamtbild zusammenzusetzen. Dieses Zusammensetzen findet vorzugsweise nach Analog/Digital-Wandlung statt. Ferner wird es bevorzugt, eine entsprechende Korrektur aufgrund der Überlappungsbereiche durchzuführen, wobei diese Überlappungsbereiche sowohl in z-Richtung, wie in Fig. 2 beispielsweise gezeigt, vorhanden sind, als auch in y-Richtung vorhanden sind, wenn mehrere Sensoren einen Spiegel abbilden, obgleich dieser Überlappungsbereich in Fig. 2 nicht eingezeichnet ist. Ferner kann der Rechner ausgebildet sein, um optische Verzeichnungen oder sonstige Artefakte zu korrigieren, die in einer Kalibrierung der Vorrichtung erfasst und dann im Betrieb rechnerisch ausgeglichen werden.

Bei einem Beispiel der Vorrichtung umfasst diese einen dritten Spiegel (116a) und einen vierten Spiegel (116b), wobei der erste Spiegel (111) angeordnet ist, um nur Strahlung auf einen empfindlichen Detektorbereich zu reflektieren, die von einem ersten Teilbereich (502) der Bildquelle (100) stammt, wobei der dritte Spiegel (116a) angeordnet ist, um nur Strahlung auf einen empfindlichen Detektorbereich zu reflektieren, die von einem zweiten Teilbereich (505) der Bildquelle (100) stammt, wobei sich der erste Teilbereich (502) von dem zweiten Teilbereich (505) unterscheidet, wobei der vierte Spiegel (116b) angeordnet ist, um eine von dem dritten Spiegel (116a) reflektierte Strahlung zu reflektieren, wobei der dritte Spiegel (116a) an einer Rückseite des zweiten Spiegels (112) angeordnet ist, und wobei zwischen dem zweiten Spiegel (112) und dem dritten Spiegel (116a) ein Röntgenstrahlenabsorbiermaterial angeordnet ist, oder wobei der zweite Spiegel (112) und der dritte Spiegel (116a) auf unterschiedlichen Seiten eines Röntgenstrahlen absorbierenden Trägermaterials ausgebildet sind.

Bei einem Beispiel der Vorrichtung umfasst der Detektor (120) mehrere Detektorkameras (121, 122, 123), wobei die Spiegelanordnung (110) mehrere Spiegelpaare (111, 112; 116a, 116b; 117a, 117b) aufweist, wobei jedem Spiegelpaar eine Detektorkamera (121, 122, 123) mit je einem empfindlichen Detektorbereich zugeordnet ist, und wobei der Detektor (120) ferner mit einem Rechner (130) gekoppelt ist, der ausgebildet ist, um von den Detektorkameras (121, 122, 123) aufgezeichnete Bilder zusammenzufügen, um das Bild zu erhalten.

Bei einem Beispiel der Vorrichtung sind der erste Spiegel (111) und der zweite Spiegel (112) so angeordnet sind, dass auf einer kürzesten Verbindungslinie zwischen dem Detektor (120) und der Bildquelle (100) wenigstens ein Spiegel angeordnet ist, so dass eine sich in Richtung der kürzesten Verbindungslinie ausbreitende Strahlung (99) auf den wenigstens einen Spiegel fällt.

Bei einem Beispiel der Vorrichtung umfasst diese einen fünften Spiegel (117a) und einen sechsten Spiegel (117b), wobei der fünfte Spiegel (117a) und der sechste Spiegel (117b) ausgebildet sind, um nur einen dritten Teilbereich (507) der Bildquelle (100) auf einen Sensor (123) abzubilden.

Bei einem Beispiel der Vorrichtung ist der fünfte Spiegel (117a) an einer Rückseite des vierten Spiegels (116b) angeordnet, wobei zwischen dem fünften Spiegel (117a) und dem vierten Spiegel (116a) ein Röntgenstrahlenabsorbiermaterial angeordnet ist, oder wobei der fünfte Spiegel (117a) und der vierte Spiegel (116a) auf unterschiedlichen Seiten eines Röntgenstrahlen absorbierenden Trägermaterials ausgebildet sind.

Bei einem Beispiel der Vorrichtung ist der Detektor (120) in Strahlungsrichtung gegenüber der Bildquelle (100) angeordnet.

Bei einem Beispiel der Vorrichtung umfasst die Spiegelanordnung (110) mehrere Spiegelpaare (111, 112; 116a, 116b; 117a, 117b), wobei jedem Spiegelpaar eine Detektorkamera (121, 122, 123) zugeordnet ist, wobei der Detektor (120) ferner mit einem Rechner (130) gekoppelt ist, der ausgebildet ist, um von den Detektorkameras (121, 122, 123) aufgezeichnete Bilder zusammenzufügen, um das Bild zu erhalten.

Bei einem Beispiel der Vorrichtung sind einem Spiegelpaar mehrere Detektorkameras zugeordnet, so dass ein Detektorkameraarray vorhanden ist, das eine Anzahl von Arrayspalten gleich der Anzahl von Detektoren, die einem Spiegelpaar zugeordnet sind, aufweist, wobei eine Anzahl von Arrayzeilen gleich einer Anzahl von Spiegelpaaren ist, wobei die Anzahl von Spiegelpaaren 1 oder größer als 1 sein kann, wobei der Detektor (120) mit einem Rechner (130) gekoppelt ist, der ausgebildet ist, um von den Detektorkameras aufgezeichnete Bilder zusammenzufügen, um das Bild zu erhalten.

Bei einem Beispiel der Vorrichtung umfasst die Spiegelanordnung (110) ferner folgende Merkmale: ein weiteres Spiegelpaar (118a, 118b), bei dem ein erster Spiegel des weiteren Spiegelpaars angeordnet ist, um ein von dem zweiten Spiegel (112) reflektiertes Licht umzulenken, und bei dem ein anderer zweiter Spiegel (118b) angeordnet ist, um ein von dem einen Spiegel (118a) des weiteren Spiegelpaars umgelenktes Licht in Richtung des Detektors (120) umzulenken.

Bei einem Beispiel der Vorrichtung ist diese in einem Gehäuse untergebracht, dessen Abmessung senkrecht zu einer Normalen (102) der Bildquelle kleiner als das 1,2-fache einer entsprechenden Abmessung der Bildquelle (100) ist.

Bei einem Beispiel der Vorrichtung ist die Spiegelanordnung (111, 112) ausgebildet, um wenigstens einen Teil der auftreffenden Röntgenstrahlung zu absorbieren oder zu streuen, so dass die Röntgenstrahlung durch die Spiegelanordnung im Hinblick auf die Intensität um wenigstens 20 % gedämpft wird.

Bei einem Beispiel der Vorrichtung umfasst diese haben der erste Spiegel (111) und der zweite Spiegel (112) eine Röntgenstrahlenabsorbierschicht.

Bei einem Beispiel der Vorrichtung umfasst eine Stelle (125a, 125b, 125c) des Detektors (120), an der die abgelenkte Strahlung (115) eintritt, ein Abschirmungsglas, das Röntgenstrahlen stärker absorbiert als die umgelenkte Strahlung (115).

Bei einem Beispiel der Vorrichtung weist der Detektor (120) eine Detektorkamera (121, 122, 123) auf, die eine Optikanordnung umfasst, die ausgebildet ist, um Röntgenstrahlen stärker zu absorbieren als die umgelenkte Strahlung.

Bei einem Beispiel der Vorrichtung weist die Spiegelanordnung (110) Röntgenstrahlen absorbierende Blenden (522) an Stellen auf, die nicht von einer Detektorkamera abgebildet werden, oder die von der Detektorkamera abgebildet werden, aber bei einer Bildnachverarbeitung eliminiert werden.

Bei einem Beispiel der Vorrichtung weist die Spiegelanordnung (110) Röntgenstrahlen absorbierende Abschirmungen (520) an Stellen auf, die nicht in einem detektierten Strahlengang von der Bildquelle (100) zum ersten Spiegel (111) liegen, oder die in einem detektierten Strahlengang von der Bildquelle (100) zum ersten Spiegel (111) liegen und bei einer anschließenden Bildverarbeitung eliminiert werden.

## Patentansprüche

1. Vorrichtung zur Erfassung eines Bildes mit folgenden Merkmalen:
einer Bildquelle (100);
einer Spiegelanordnung (110) zum Umlenken von Strahlung (102), die von der Bildquelle (100) erzeugbar ist; und
einem Detektor (120) zum Aufnehmen einer durch die Spiegelanordnung (110) umgelenkten Strahlung (119),
wobei die Spiegelanordnung (110) folgende Merkmale aufweist:
einen ersten Spiegel (111), der angeordnet ist, um die von der Bildquelle (100) erzeugte Strahlung (102) zu reflektieren;
einen zweiten Spiegel (112), der angeordnet ist, um eine von dem ersten Spiegel (111) reflektierte Strahlung zu reflektieren,
wobei der erste Spiegel (111) und der zweite Spiegel (112) voneinander beabstandet sind und zueinander parallel sind oder einen Winkel kleiner als 90° bilden.
wobei die Bildquelle eine Szintillatorschicht umfasst, die von einer Röntgenstrahlung (99) zur Emission der Strahlung (102) anregbar ist, **dadurch gekennzeichnet, dass**
der Detektor (120) in einem Strahlengang der Röntgenstrahlung angeordnet ist, und
die Spiegelanordnung (110) ausgebildet ist, um zumindest einen Teil von Röntgenstrahlung, die die Szintillatorschicht durchdringt, vor dem Detektor (120) abzuschirmen, derart, dass Röntgenstrahlung, die durch die Szintillatorschicht hindurchtritt, nicht direkt zu dem Detektor gelangen kann, sondern durch den ersten Spiegel und den zweiten Spiegel hindurchtreten muss und dabei wenigstens geschwächt wird, derart, dass der Detektor durch die Spiegelanordnung vor Röntgenstrahlung geschützt wird.

2. Vorrichtung nach Anspruch 1, bei der der erste Spiegel (111) und der zweite Spiegel (112) so angeordnet sind, dass eine Richtung der von dem zweiten Spiegel (112) reflektierten Strahlung (115) zu der auf den ersten Spiegel (111) auftreffenden Strahlung (102) einen Winkel zwischen 0 und 80° hat.

3. Vorrichtung nach einem der vorhergehenden Ansprüche, bei der die Bildquelle (100) eine Szintillatorschicht aufweist, die ausgebildet ist, um ansprechend auf einen Röntgenstrahleneinfall (99) die Strahlung (102) zu erzeugen, wobei die Strahlung (102) eine oder mehrere Wellenlängen hat, die von dem Detektor (120) erfassbar sind.

4. Vorrichtung nach einem der vorhergehenden Ansprüche, bei der der erste Spiegel (111) und der zweite Spiegel (112) so angeordnet sind, dass die von der Spiegelanordnung (110) umgelenkte Strahlung in einer Richtung umgelenkt wird, die parallel zu einer Flächennormalen (102) der Bildquelle (100) ist, oder die einen Winkel zu der Flächennormalen (102) bildet, der kleiner als 80° ist.

5. Vorrichtung nach einem der vorhergehenden Ansprüche, bei der der Detektor (120) von einer Röntgenstrahlenäbschirmung (124) umgeben ist, die ausgebildet ist, um dort, wo die durch die Spiegelanordnung (110) umgelenkte Strahlung nicht in den Detektor (120) eintritt, den Detektor (120) abzuschirmen.

6. Verfahren zum Erfassen eines Bildes mit folgenden Schritten:
Emittieren einer Strahlung (102), die ein Bild darstellt;
Umlenken (110) der Strahlung (102), um eine umgelenkte Strahlung (119) zu erhalten; und
Detektieren (120) der umgelenkten Strahlung (119) mit einem Detektor (120), der in einem Strahlengang der Röntgenstrahlung angeordnet ist, um das Bild zu erhalten,
wobei im Schritt des Umlenkens die Strahlung (102) von einem ersten Spiegel (111) reflektiert wird, und wobei die von dem ersten Spiegel (111) reflektierte Strahlung von einem zweiten Spiegel (112) umgelenkt wird, wobei der erste Spiegel (111) und der zweite Spiegel (112) voneinander beabstandet sind und zueinander parallel sind oder einen Winkel kleiner als 90° bilden.
wobei im Schritt des Emittierens eine Szintillatorschicht (100) durch Röntgenstrahlung (99) angeregt wird, um die emittierte Strahlung (102) zu erzeugen, und
wobei im Schritt des Umlenkens (110) ein Abschirmen der Röntgenstrahlung (99) vor dem Detektor (120) durchgeführt wird, derart, dass Röntgenstrahlung, die durch die Szintillatorschicht hindurchtritt, nicht direkt zu dem Detektor gelangen kann, sondern durch den ersten Spiegel und den zweiten Spiegel hindurchtreten muss und dabei wenigstens geschwächt wird, derart, dass der Detektor durch die Spiegelanordnung vor Röntgenstrahlung geschützt wird.

7. Verfahren zum Herstellen einer Vorrichtung mit einer Bildquelle (100), einer Spiegelanordnung (110) zum Umlenken von Strahlung (102), die von der Bildquelle (100) erzeugbar ist, und einem Detektor (120) zum Aufnehmen von durch die Spiegelanordnung (110) umgelenkten Strahlung (115), wobei die Bildquelle eine Szintillatorschicht umfasst, die von einer Röntgenstrahlung (99) zur Emission der Strahlung (102) anregbar ist, wobei der Detektor (120) in einem Strahlengang der Röntgenstrahlung angeordnet ist, mit folgenden Schritten:
Anordnen eines ersten Spiegels, um eine von der Bildquelle (100) emittierte Strahlung (102) zu reflektieren; und
Anordnen eines zweiten Spiegels (112), um eine von dem ersten Spiegel (111) reflektierte Strahlung zu reflektieren, und
wobei im Schritt des Anordnens des ersten Spiegels (111) und des zweiten Spiegels (112) die beiden Spiegel so angeordnet werden, dass sie voneinander beabstandet sind und zueinander parallel sind oder einen Winkel kleiner als 90° zueinander haben, und wobei die Spiegelanordnung (110) ausgebildet ist, um zumindest einen Teil von Röntgenstrahlung, die die Szintillatorschicht durchdringt, vor dem Detektor (120) abzuschirmen, derart, dass Röntgenstrahlung, die durch die Szintillatorschicht hindurchtritt, nicht direkt zu dem Detektor gelangen kann, sondern durch den ersten Spiegel und den zweiten Spiegel hindurchtreten muss und dabei wenigstens geschwächt wird, derart, dass der Detektor durch die Spiegelanordnung vor Röntgenstrahlung geschützt wird.

## Claims

1. An apparatus for detecting an image, comprising:
an image source (100);
a mirror arrangement (110) for deflecting radiation (102) which may be generated by the image source (100); and
a detector (120) for receiving radiation (119) deflected by the mirror arrangement (110),
the mirror arrangement (110) comprising:
a first mirror (111) arranged to reflect the radiation (102) generated by the image source (100);
a second mirror (112) arranged to reflect radiation reflected by the first mirror (111),
the first mirror (111) and the second mirror (112) being spaced apart from one another and being parallel to one another or forming an angle of less than 90° between them,
the image source comprising a scintillator layer which is excitable by an X-radiation (99) for emitting the radiation (102), **characterized in that**
the detector (120) is arranged within a light path of the X-radiation, and
the mirror arrangement (110) is configured to shield at least some X-radiation which penetrates the scintillator layer from the detector (120) such that X-radiation which passes through the scintillator layer cannot arrive directly at the detector, but must pass through the first mirror and the second mirror and is at least weakened in the process, such that the detector is protected from X-radiation by the mirror arrangement.

2. The apparatus as claimed in claim 1, wherein the first mirror (111) and the second mirror (112) are arranged such that a direction of the radiation (115) reflected by the second mirror (112) to the radiation (102) impinging on the first mirror (111) comprises an angle of between 0 and 80°.

3. The apparatus as claimed in any of the previous claims, wherein the image source (100) comprises a scintillator layer configured to generate the radiation (102) in response to incidence of X-rays (99), the radiation (102) having one or more wavelengths which are detectable by the detector (120).

4. The apparatus as claimed in any of the previous claims, wherein the first mirror (111) and the second mirror (112) are arranged such that the radiation deflected by the mirror arrangement (110) is deflected in a direction which is parallel to a normal to surface (102) of the image source (100), or which forms an angle of less than 80° with the normal to surface (102).

5. The apparatus as claimed in any of the previous claims, wherein the detector (120) is surrounded by an X-ray shield (124) configured to shield the detector (120) where the radiation deflected by the mirror arrangement (110) does not enter into the detector (120).

6. A method of detecting an image, comprising:
emitting a radiation (102) which represents an image;
deflecting (110) the radiation (102) so as to obtain deflected radiation (119); and
detecting (120) the deflected radiation (119) with a detector (120) arranged within a light path of the X-radiation so as to obtain the image,
in the deflecting step, the radiation (102) being reflected by a first mirror (111), and the radiation reflected by the first mirror (111) being deflected by a second mirror (112), the first mirror (111) and the second mirror (112) being spaced apart from each other and being parallel to each other or forming an angle of less than 90° between them,
in the emitting step, a scintillator layer (100) being excited by X-radiation (99) so as to generate the emitted radiation (102), and
in the step of deflecting (110), shielding of the X-radiation (99) from the detector (120) being conducted such that X-radiation passing through the scintillator layer cannot arrive at the detector directly, but must pass through the first mirror and the second mirror and is at least weakened in the process, such that the detector is protected from X-radiation by the mirror arrangement.

7. A method of manufacturing an apparatus comprising an image source (100), a mirror arrangement (110) for deflecting radiation (102) which may be generated by the image source (100), and a detector (120) for receiving radiation (115) deflected by the mirror arrangement (110), the image source comprising a scintillator layer which is excitable by an X-radiation (99) for emitting the radiation (102), the detector (120) being arranged within a light path of the X-radiation, the method comprising:
arranging a first mirror to reflect radiation (102) emitted by the image source (100); and
arranging a second mirror (112) to reflect radiation reflected by the first mirror (111), and
in the step of arranging the first mirror (111) and the second mirror (112), the two mirrors being arranged such that they are spaced apart from each other and are parallel to each other or form an angle of less than 90° between them, and the mirror arrangement (110) being configured to shield at least some X-radiation which penetrates the scintillator layer from the detector (120) such that X-radiation which passes through the scintillator layer cannot arrive directly at the detector, but must pass through the first mirror and the second mirror and is at least weakened in the process, such that the detector is protected from X-radiation by the mirror arrangement.

## Revendications

1. Dispositif d'acquisition d'une image, aux caractéristiques suivantes:
une source d'image (100);
un aménagement de miroirs (110) destiné à dévier le rayonnement (102) pouvant être généré par la source d'image (100); et
un détecteur (120) destiné à recevoir un rayonnement (119) dévié par un aménagement de miroirs (110),
dans lequel l'aménagement de miroirs (110) présente les caractéristiques suivantes:
un premier miroir (111) qui est disposé de manière à réfléchir le rayonnement (102) généré par la source d'image (100);
un deuxième miroir (112) qui est disposé de manière à réfléchir un rayonnement réfléchi par le premier miroir (111),
le premier miroir (111) et le deuxième miroir (112) étant distants l'un de l'autre et parallèles l'un à l'autre ou formant un angle inférieur à 90° entre eux,
dans lequel la source d'image comporte une couche de scintillateur qui peut être activée par un rayonnement X (99) pour l'émission du rayonnement (102),
**caractérisé par le fait que**
le détecteur (120) est disposé dans un trajet de rayons du rayonnement X, et
l'aménagement de miroir (110) est réalisé pour protéger au moins une partie du rayonnement X traversant la couche de scintillateur contre le détecteur (120) de sorte que le rayonnement X traversant la couche de scintillateur ne puisse arriver directement au détecteur, mais doive passer par le premier miroir et le deuxième miroir et soit de ce fait affaibli de sorte que le détecteur soit protégé par l'aménagement de miroirs contre le rayonnement X.

2. Dispositif selon la revendication 1, dans lequel le premier miroir (111) et le deuxième miroir (112) sont disposés de sorte qu'une direction de rayonnement (115) réfléchi par le deuxième miroir (112) présente par rapport au rayonnement (102) incident sur le premier miroir (111) un angle compris entre 0 et 80°.

3. Dispositif selon l'une des revendications précédentes, dans lequel la source d'image (100) présente une couche de scintillateur qui est réalisée pour générer le rayonnement (102) en réponse à une incidence de rayonnement X (99), le rayonnement (102) ayant une ou plusieurs longueurs d'onde pouvant être détectées par le détecteur.

4. Dispositif selon l'une des revendications précédentes, dans lequel le premier miroir (111) et le deuxième miroir (112) sont disposés de sorte que le rayonnement dévié par l'aménagement de miroirs (110) soit dévié dans une direction qui est parallèle à une normale de surface (102) de la source d'image (100) ou qui présente par rapport à la normale de surface (102) un angle qui est inférieur à 80°.

5. Dispositif selon l'une des revendications précédentes, dans lequel le détecteur (120) est entouré d'une protection contre les rayons X (124) qui est réalisée pour protéger le détecteur (120) là où le rayonnement dévié par l'aménagement de miroirs (110) ne pénètre pas dans le détecteur (120).

6. Procédé d'acquisition d'une image, aux étapes suivantes consistant à:
émettre un rayonnement (102) qui représente une image;
dévier (110) le rayonnement (102), pour obtenir un rayonnement (119) dévié; et
détecter (120) le rayonnement dévié (119) par un détecteur (120) qui est disposé dans un trajet de rayons du rayonnement X, pour obtenir l'image,
dans lequel, à l'étape de déviation, le rayonnement (102) est réfléchi par un premier miroir (111) et dans lequel le rayonnement réfléchi par le premier miroir (111) est dévié par un deuxième miroir (112), le premier miroir (111) et le deuxième miroir (112) étant distants l'un de l'autre et parallèles l'un à l'autre ou formant entre eux un angle inférieur à 90°,
dans lequel, à l'étape d'émission, une couche de scintillateur (100) est activée par le rayonnement X (99) pour générer le rayonnement émis (102), et
dans lequel, à l'étape de déviation (110) est réalisée une protection du rayonnement X (99) contre le détecteur (120) de sorte que le rayonnement X qui traverse la couche de scintillateur ne puisse pas arriver directement au détecteur, mais doive passer par le premier miroir et le deuxième miroir et soit ainsi au moins atténué de sorte que le détecteur soit protégé par l'aménagement de miroirs contre le rayonnement X.

7. Procédé de fabrication d'un dispositif avec une source d'image (100), un aménagement de miroirs (110) destiné à dévier le rayonnement (102) pouvant être généré par la source d'image (100), et un détecteur (120) destiné à recevoir le rayonnement (115) dévié par l'aménagement de miroirs (110), dans lequel la source d'image comporte une couche de scintillateur pouvant être activée par un rayonnement X (99) pour l'émission du rayonnement (102), dans lequel le détecteur (120) est disposé dans un trajet de rayons du rayonnement X, aux étapes suivantes consistant à:
disposer un premier miroir pour réfléchir un rayonnement (102) émis par la source d'image (100); et
disposer un deuxième miroir (112) pour réfléchir un rayonnement réfléchi par le premier miroir (111), et
dans lequel, à l'étape de disposition du premier miroir (111) et du deuxième miroir (112), les deux miroirs sont disposés de sorte qu'ils soient distants l'un de l'autre et parallèles l'un à l'autre ou forment entre eux un angle inférieur à 90°, et dans lequel l'aménagement de miroirs (110) est réalisé pour protéger au moins une partie du rayonnement X traversant la couche de scintillateur contre le détecteur (120) de sorte que le rayonnement X traversant la couche de scintillateur ne puisse pas arriver directement au détecteur, mais doive passer par le premier miroir et le deuxième miroir et soit de ce fait au moins atténué de sorte que le détecteur soit protégé par l'aménagement de miroirs contre le rayonnement X.
